# EUROPÄISCHE PATENTSCHRIFT

(11) **EP 0 523 393 B1**
(45) Veröffentlichungstag und Bekanntmachung des Hinweises auf die Patenterteilung: **27.04.1994**
(21) Anmeldenummer: 92110376.8
(22) Anmeldetag: 19.06.1992
(51) Int. Cl.: F16B 35/04, F16B 15/06, F16B 13/00

(54) **Schraube zum Einbringen in einen Spreizdübel**
Screw to be introduced into an expansion dowel
Vis à introduire dans une cheville à expansion

(30) Priorität: 17.07.1991 DE 9108788 U
(43) Veröffentlichungstag der Anmeldung: 20.01.1993
(73) Patentinhaber: Albert Graf Gmbh & Co. KG., D-58762 Altena (DE)
(72) Erfinder: Schmerbeck, Gerhard, W-5990 Altena 8-Dahle (DE)
(74) Vertreter: Dörner, Lothar, Dipl.-Ing.

(56) Entgegenhaltungen:
- CH-A- 338 953
- DE-A- 3 514 948
- DE-U- 9 011 380
- DE-U- 9 108 788
- FR-A- 1 078 088
- GB-A- 646 246

## Beschreibung

Die Erfindung betrifft eine Schraube zum Einbringen in einen Spreizdübel, mit einem Schraubengewinde im Anschluß an eine Schraubenspitze und mit einem metrischen Gewinde am entgegengesetzen Ende.

Schrauben der vorgenannten Art werden z.B. für die Befestigung von Regenfallrohren sowie im Sanitär- und in Bauzubehörbereich verwendet: In ein vorbereitetes Loch in einer Wand wird ein Spreizdübel eingesetzt. In den Spreizdübel wird das in der Form eines Holzgewindes vorliegende Schraubengewinde mit Hilfe eines Werkzeugs eingeschraubt. Auf das metrische Gewinde wird dann eine Hälfte einer Rohrschelle aufgeschraubt, deren andere Hälfte um das Regenfallrohr gelegt und mit der einen Hälfte verbunden wird. Das Einschrauben dieser Schrauben gestaltet sich zeitaufwendig.

Die in den Patentansprüchen beschriebene Erfindung löst die Aufgabe, eine Schraube der genannten Art so auszubilden, daß ihr Eintreiben in den Spreizdübel vereinfacht/beschleunigt wird, wobei selbstverständliche Voraussetzung ist, daß das metrische Gewinde nicht beschädigt werden darf.

Im Sinne der Erfindung ist ein Nagelschraubengewinde ein sägeförmiges Gewinde, über dessen Schultern die Fasern des Spreizdübels gleiten und widerhakenförmig hinter die Schultern greifen; ein Schraubnagelgewinde ein Gewinde, bei dem mehrere Gewindestränge wendelartig nebeneinander um den Schaft verlaufen. Sowohl Schraubnägel (vgl. DIN 15146) als auch Nagelschrauben (vgl. DIN 7514 und 7515) sind bekannt. Der erfinderische Schritt beruht bei der Schraube nach der Erfindung darauf, Nagelschraubengewinde und Schraubnagelgewinde neuen Aufgaben angepaßt zu haben. Bezogen auf die Schrauben der gattungsgemäßen Art ist an die Stelle des bisher verwendeten Holzgewindes ein Einschlaggewinde getreten.

Ausgestaltungen und Weiterbildungen der Erfindung sind in Unteransprüchen beschrieben. Ausführungsbeispiele der Erfindung sind in der Zeichnung dargestellt und werden nachfolgend im einzelnen beschrieben. Es zeigen jeweils in etwa im Maßstab 1:2 vergrößerter Vorderansicht:
- Fig. 1: eine Einschlagstockschraube mit Nagelschraubengewinde:
- Fig. 2: eine Einschlagbundschraube mit Nagelschraubengewinde;
- Fig. 3: eine Einschlagstockschraube mit Schraubnagelgewinde;
- Fig. 4: eine Einschlagbundschraube mit Schraubnagelgewinde.

Alle als Ausführungsbeispiel gewählten Schrauben weisen an einem Ende eine Schraubspitze 1, am entgegengesetzen Ende eine Einschlagkuppe 2 auf. An die Einschlagkuppe 2 schließt ein metrisches Gewinde 3 an, auf das nach dem Einbringen der Schraube in einen Dübel das Gewinde eines Werkstücks schraubbar ist, z.B. eine Rohrschelle.

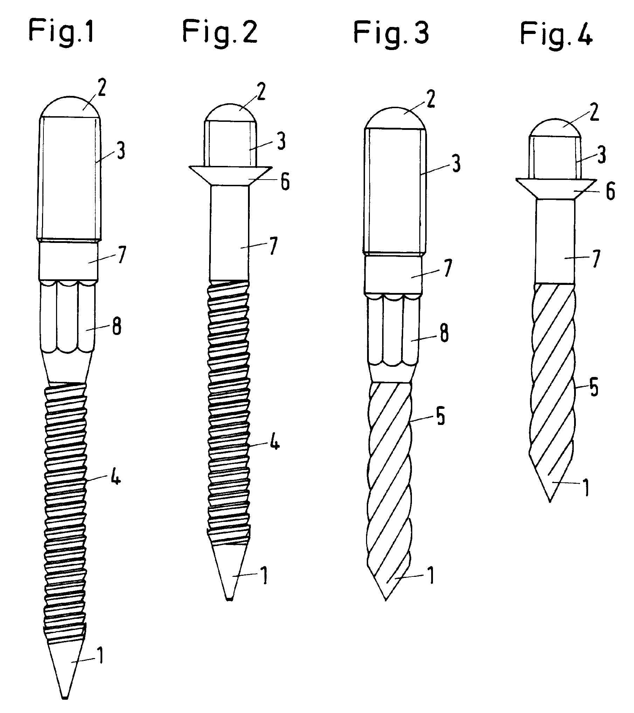

Bei den in den Figuren 1 und 2 dargestellten Schrauben ist die Schraubspitze 1 als Nagelspitze ausgebildet. An sie schließt ein Nagelschraubengewinde 4 an.

Bei den in den Figuren 3 und 4 dargestellten Schrauben ist die Schraubspitze 1 als Gewindespitze ausgebildet. An sie schließt ein Schraubnagelgewinde 5 an. Das Schraubnagelgewinde 5 ist in der Nagelspitze 1 fortgesetzt.

Bei den in den Figuren 2 und 4 dargestellten Schrauben ist das metrische Gewinde 3 auf der der Einschlagkuppe 2 abgewandten Seite durch einen Bund 6 begrenzt. Der Bund 6 stützt das auf das metrische Gewinde 3 aufgeschraubte Werkstück, z.B. die Rohrschelle.

Zwischen dem metrischen Gewinde 3 oder dem Bund 6 einerseits und dem Nagelschraubengewinde 4 bzw. dem Schraubnagelgewinde 5 andererseits ist ein glatter Schraubenschaft 7 vorgesehen. Bei dem in den Figuren 1 und 3 dargestellten Schrauben ist zwischen dem glatten Schraubenschaft 7 und dem Nagelschraubengewinde 4 bzw. dem Schraubnagelgewinde 5 eine Schlüsselfläche 8 vorgesehen. Die Schlüsselfläche 8 dient dazu, die in einen Dübel eingeschlagene Schraube wieder zu lösen.

Möglich ist die - in der Zeichnung nicht dargestellte - Kombination der Schlüsselfläche 8 mit dem Bund 6 bei derselben Schraube. Möglich ist auch - ebenfalls nicht in der Zeichnung dargestellt - die Verwendung sowohl eines Nagelschraubengewindes 4 als auch eines Schraubnagelgewindes 5 bei derselben Schraube.

## Patentansprüche

1. Schraube zum Einbringen in einen Spreizdübel, mit einem Schraubengewinde im Anschluß an eine Schraubenspitze und mit einem metrischen Gewinde am entgegengesetzten Ende, dadurch gekennzeichnet, daß als Schraubengewinde ein Nagelschraubengewinde (4), als Schraubenspitze (1) eine Nagelspitze, zwischen dem metrischen Gewinde (3) einerseits und dem Nagelschraubengewinde (4) andererseits ein glatter Schraubenschaft (7) vorgesehen sind und daß das der Schraubenspitze (1) entgegengesetzte Ende als Einschlagkuppe (2) ausgebildet ist.

2. Schraube zum Einbringen in einen Speizdübel, mit einem Schraubengewinde im Anschluß an eine Schraubenspitze und mit einem metrischen Gewinde am entgegengesetzten Ende, dadurch gekennzeichnet, daß als Schraubengewinde ein Schraubnagelgewinde (5) vorgesehen und das Schraubnagelgewinde (5) in die Schraubenspitze (1) fortgesetzt ist und daß zwischen dem metrischen Gewinde (3) einerseits und dem Schraubnagelgewinde (5) andererseits ein glatter Schraubenschaft (7) vorgesehen und das der Schraubenspitze (1) entgegengesetzte Ende als Einschlagkuppe (2) ausgebildet ist.

3. Schraube nach Anspruch 1 oder 2, dadurch gekennzeichnet, daß das metrische Gewinde (3) auf der der Einschlagkuppe (2) entgegengesetzten Seite von einem Bund (6) begrenzt ist.

4. Schraube nach einem der Ansprüche 1 bis 3, dadurch gekennzeichnet, daß zwischen dem glatten Schraubenschaft (7) einerseits und dem Schraubengewinde (4;5) andererseits eine Schlüsselfläche (8) vorgesehen ist.

## Claims

1. Screw for introduction into a straddling dowel, having a screw thread adjoining a screw tip and having a metric thread at the opposite end, characterized in that a drive screw thread (4) is provided as a screw thread, a nail tip is provided as a screw tip (1), a smooth screw shank (7) is provided between the metric thread (3) on the one hand and the drive screw thread (4) on the other hand and that the end opposite the screw tip (1) takes the form of a spherical drive-in cap (2).

2. Screw for introduction into a straddling dowel, having a screw thread adjoining a screw tip and having a metric thread at the opposite end, characterized in that a screw nail thread (5) is provided as a screw thread and the screw nail thread (5) is continued into the screw tip (1) and that a smooth screw shank (7) is provided between the metric thread (3) on the one hand and the screw nail thread (5) on the other hand and the end opposite the screw tip (1) takes the form of a spherical drive-in cap (2).

3. Screw according to claim 1 or 2, characterized in that the metric thread (3) is delimited at the end opposite the spherical drive-in cap (2) by a collar (6).

4. Screw according to one of claims 1 to 3, characterized in that a key surface (8) is provided between the smooth screw shank (7) on the one hand and the screw thread (4; 5) on the other hand.

## Revendications

1. Vis à introduire dans une cheville à expansion, comprenant un filetage de vis qui fait suite à une pointe de vis, et un filetage métrique à l'extrémité opposée, **caractérisée en ce** qu'elle comprend comme filetage de vis un filetage de clou fileté (4), comme pointe de vis (1), une pointe de clou et entre le filetage métrique (3) d'une part et le filetage de clou fileté (4) d'autre part, une tige de vis lisse (7), et que l'extrémité opposée à la pointe de vis (1) est conformée en calotte de frappe (2).

2. Vis à introduire dans une cheville à expansion, comprenant un filetage de vis qui fait suite à une pointe de vis, et un filetage métrique à l'extrémité opposée, caractérisée en ce qu'elle comprend comme filetage de vis, un filetage de clou taraudeur (5), que le filetage de clou taraudeur (5) se prolonge dans la pointe de vis (1), qu'entre le filetage métrique (3) d'une part et le filetage de clou taraudeur (5) d'autre part, est prévue une tige de vis lisse (7) et que l'extrémité opposée à la pointe de vis (1) est conformée en calotte de frappe (2).

3. Vis selon l'une des revendications 1 ou 2, caractérisée en ce que du côté opposé à la calotte de frappe (2), le filetage métrique (3) est limité par une embase (6).

4. Vis selon l'une des revendications 1 à 3, caractérisée en ce que, entre la tige de vis lisse (7) d'une part et le filetage de vis (4; 5) d'autre part, est prévue une surface d'attaque de clé (8).
